# EUROPÄISCHE PATENTSCHRIFT

(11) **EP 0 649 249 B1**
(45) Veröffentlichungstag und Bekanntmachung des Hinweises auf die Patenterteilung: **23.07.1997**
(21) Anmeldenummer: 94115727.3
(22) Anmeldetag: 06.10.1994
(51) Int. Cl.: H04N 5/05, H04N 5/08

(54) **Synchronsignal-Abtrennschaltung für einen Fernsehempfänger**
Synchronizing signal separation circuit for a television receiver
Circuit séparateur du signal de synchronisation pour un récepteur de télévision

(30) Priorität: 15.10.1993 DE 4335197
(43) Veröffentlichungstag der Anmeldung: 19.04.1995
(73) Patentinhaber: DEUTSCHE THOMSON-BRANDT GMBH, 78048 Villingen-Schwenningen (DE)
(72) Erfinder: Rothermel, Albrecht, D-78048 Villingen-Schwenningen (DE); Correa, Carlos, D-78056 Villingen-Schwenningen (DE)

(56) Entgegenhaltungen:
- EP-A- 0 290 971
- EP-A- 0 323 935

## Beschreibung

Die Erfindung geht aus von einer Synchronsignal-Abtrennschaltung für einen Fernsehempfänger gemäß dem Oberbegriff des Anspruchs 1.

In einem Fernsehempfänger ist die Zeilenablenkschaltung mit einer hohen Zeitkonstante versehen, um Störungen in Form von fehlenden oder kurzzeitig in der Phase falschen Zeilensynchronsimpulsen auszugleichen. Eine derart hohe Zeitkonstante ist möglich, weil die vom Sender kommenden Zeilensynchronimpulse in Frequenz und Phase praktisch mit hoher Genauigkeit konstant sind und Phasenverschiebungen im Zeilenraster praktisch nicht auftreten.

In der Praxis werden jedoch dem Fernsehempfänger auch Videosignale mit nennenswerten Änderungen in der Frequenz und in der Phasenlage des Zeilenrasters angeboten. Das ist insbesondere der Fall, wenn das Videosignal von einem Videorecorder geliefert wird, weil dann durch Geschwindigkeitsschwankungen, Banddehnung und sonstige Einflüsse Zeilenfrequenz und Phasenlage des Zeilenrasters nicht mehr konstant sind. Insbesondere treten plötzliche Änderungen in der Phasenlage des Zeilenrasters dann auf, wenn bei einem Suchlauf in einem Videorecorder der abtastende Videokopf schräg über mehrere benachbarte Spuren läuft. Wenn dann die Zeitkonstante der Zeilenablenkung im Fernsehempfänger den genannten hohen Wert hat, kann die Zeilenablenkung der neuen Phase nicht schnell genug folgen, und es kommt zu Geometriestörungen im wiedergegebenen Bild. Es ist dann notwendig und bekannt, bei einem solchen Signal die Zeitkonstante in der Zeilensynchronisierung auf einen geringeren Wert umzuschalten. Nach diesem Prinzip funktionierende Schaltungen sind aus den Druckschriften EP-A-0 290 971 und EP-A-0 323 935 bekannt.

Die angestrebte hohe Störsicherheit führt also zu einer hohen Zeitkonstante, während ein Signal mit in Frequenz oder Phase schwankenden Zeilenimpulsen eine kleinere Zeitkonstante erfordert. Bei der Bemessung der Zeilenablenkschaltung ist daher ein Kompromiß erforderlich, um beiden Anforderungen ausreichend gerecht zu werden.

Der Erfindung liegt die Aufgabe zugrunde, eine Synchronsignal-Abtrennschaltung so auszubilden, daß kein unbefriedigender Kompromiß notwendig ist, sondern die Forderungen nach einer hohen Zeitkonstante zur Störsicherheit und einer kleinen Zeitkonstante zur Anpassung an Signale mit Frequenz- und Phasenfehlern gleichermaßen erfüllt werden. Diese Aufgabe wird durch die im Anspruch 1 angegebene Erfindung gelöst. Vorteilhafte Weiterbildungen der Erfindung sind in den Unteransprüchen angegeben.

Bei der erfindungsgemäßen Lösung wird also in der Steuerschaltung zunächst die Struktur des angebotenen Videosignals untersucht. Dabei gibt es insbesondere drei Zustände. Die Zeilensynchronimpulse können wie bei einem Sendersignal absolut konstante Frequenz und Phase aufweisen, also keine Störungen in dem Zeilenraster beinhalten. In einem zweiten Fall ist z.B. nur ein Zeilensynchronimpuls innerhalb des Zeilenrasters in der Phase verschoben oder fehlt vollständig, während das Zeilenraster nicht gestört ist. In einem dritten Fall ist mit Beginn einer Störung das gesamte Zeilenraster gegenüber dem bisherigen Zeilenraster um einen Zeitbetrag in der Phase verschoben, wobei die Frequenz gleich geblieben sein kann. Im ersten Fall und dem zweiten Fall beeinflußt die Steuerschaltung die mit einer Schwungradstufe versehene Synchronsignal-Abtrennschaltung nicht. In diesen beiden Fällen liegt nur eine kurzzeitige Störung vor, die durch die unverändert weiter laufende Schwungradstufe ausgeglichen wird. Im dritten Fall ist es jedoch erwünscht und notwendig, daß sich die Abtrennschaltung möglichst schnell auf die neue Phasenlage der Rasters einstellt. Das ist aber zunächst bei wirksamer Schwungradstufe, die die hohe Zeitkonstante darstellt, nicht möglich. Deshalb wird im dritten Fall die Schwungradstufe bewußt kurzzeitig abgeschaltet, z.B. eine Zeitkonstante beträchtlich verringert. Die Abtrennschaltung hat dann die Möglichkeit, sich in erwünschter Weise praktisch trägheitslos auf die neue Phasenlage des Zeilenrasters einzustellen. Sobald das erfolgt ist, nach wenigen Zeilen oder innerhalb einer Zeile, wird die Schwungradstufe wieder aktiviert, also die wirksame Zeitkonstante wieder erhöht, damit nun in erwünschter Weise wieder die gewünschte Störsicherheit gegeben ist.

Die genannte Maßnahme, nämlich die Außerbetriebsetzung der Schwungradstufe, soll zu Beginn einer Störung, z.B. bei dem Sprung in der Phasenlage der Zeilensynchronimpulse möglichst sofort erfolgen. Andererseits benötigt aber die Steuerschaltung mehrere Zeilen, um die Struktur der Zeilensynchronimpulse zu untersuchen. Die Schaltung muß also gewissermaßen "in die Zukunft sehen können", um unverzögert eine Maßnahme durchzuführen, deren Notwendigkeit eigentlich erst später erkannt wird. Um das zu ermöglichen, wird das angelieferte Videosignal der Abtrennstufe über eine Verzögerungsstufe von mehreren Zeilen zugeführt. Dadurch ist es möglich, die erst mehrere Zeilen nach Beginn einer Störung als notwendig erkannte Maßnahme bereits zu Beginn der Störung einzuleiten.

Bei der erfindungsgemäßen Lösung werden also die Vorteile der Schwungradstufe mit der großen Zeitkonstante für die Störunterdrückung mit den Vorteilen der kleinen Zeitkonstante bei der Anpassung an ein schwankendes Signal kombiniert, indem sich die Schaltung selbsttätig an die jeweilige Struktur des Signals anpaßt. Bei völlig ungestörtem Sendersignal oder einem Signal mit einer nur kurzen Störung während nur einer Zeile bleiben die Schwungradstufe und die hohe Zeitkonstante wirksam. Bei einem Signal mit einer Störung in Form eines plötzlichen Versatzes in der Phasenlage des Zeilenrasters indessen wird selbsttätig die Schwungradstufe inaktiviert und damit kurzzeitig die gewünschte kleine Zeitkonstante wirksam.

Die Erfindung wird im folgenden anhand der Zeichnung erläutert.
Darin zeigen
- Fig. 1: ein vereinfachtes Blockschaltbild der erfindungsgemäßen Lösung,
- Fig. 2: Kurven zur Erläuterung der Wirkungsweise der Schaltung nach Fig. 1,
- Fig. 3: ein Blockschaltbild für eine Ausführungsform der Steuerschaltung und
- Fig. 4: Diagramme zur Erläuterung von Störungen in der Zeilenablenkung.

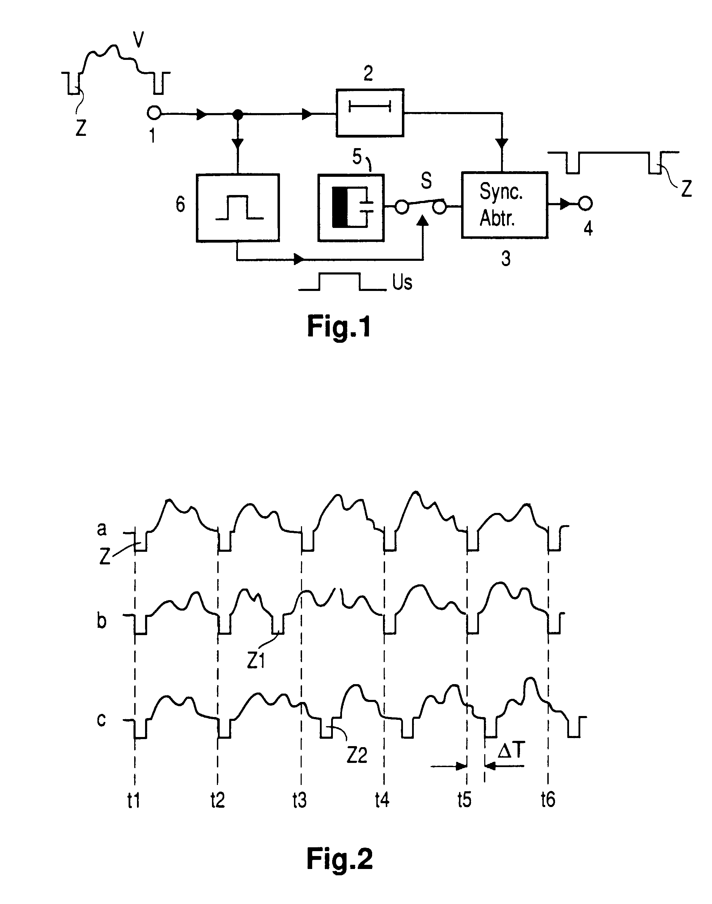

In Fig. 1 wird das angebotene Videosignal V mit den Zeilensynchronimplsen Z, das von einem Fernsehsender, einem Videorecorder oder einer sonstigen Signalquelle kommen kann, von der Klemme 1 über die Verzögerungsstufe 2 mit einer Verzögerungszeit in der Größenordnung von drei Zeilen der Synchronsignal-Abtrennstufe 3 zugeführt, die an ihrem Ausgang 4 die abgetrennten Zeilensynchronimpulse Z liefert. Der Abtrennstufe 3 ist die symbolisch durch einen Schwingkreis dargestellte Schwungradstufe 5 zugeordnet. Die Schwungradstufe 5 bewirkt in der Abtrennstufe 3 eine hohe Zeitkonstante, derart, daß z.B. das Fehlen oder eine vorübergehend geänderte Phasenlage nur eines Zeilensynchronimpulse unterdrückt wird. Das Videosignal V gelangt außerdem an die Steuerschaltung 6, die den zeitlichen Ablauf in der Phasenlage der Zeilensynchronimpulse untersucht.

Anhand von Fig. 2 wird die Wirkungsweise der Schaltung nach Fig. 1 an zwei Extremfällen erläutert. Fig. 2a zeigt ein ungestörtes Videosignal V mit konstantem zeitlichen Abstand der Zeilensynchronimpulse Z ohne jeden Fehler in Frequenz und Phase. Bei einem derartigen Signal beeinflußt die Steuerschaltung 6 die Abtrennstufe 3, 5 nicht, d.h. die Schwungradstufe 5 bleibt über den geschlossenen Schalter S eingeschaltet. Gemäß Fig. 2b hat während der Zeile zwischen den Zeitpunkten t2 und t3 nur der Zeilensynchronimpuls Z1 eine falsche Phasenlage, während in den daraufolgenden Zeilen die Zeilensynchronimpulse bei t4, t5, t6 usw. wieder eine ungestörte Phasenlage haben. In diesem Falle beeinflußt die Steuerschaltung 6 die Abtrennschaltung 3, 5 ebenfalls nicht. Die falsche Phasenlage von Z1 wird also durch die Wirkung der Schwungradstufe 5 in der Stufe 3 unterdrückt und erscheint am Ausgang 4 nicht. Gemäß Fig. 2c kommt es zwischen t2 und t4 zu einem Phasensprung in der Lage der Zeilensynchronimpulse Z, z.B. dadurch, daß in einem Videorecorder der abgetastete Videokopf von einer Schrägspur auf eine benachbarte Schrägspur gelaufen ist. Beginnend mit dem Zeilensynchronimpuls Z2 ist somit die Phasenlage des Zeilenrasters gegenüber der Phasenlage des Zeilenrasters gemäß Fig. 2a plötzlich geändert, bleibt aber im folgendem unverändert. Für diesen Fall gemäß Fig. 2c erzeugt die Steuerschaltung 6 ein Steuersignal Us. Us öffnet den symbolischen Schalter S und trennt dadurch die Schwungradstufe 5 von der Abtrennstufe 3. Vorzugsweise wird die sonst wirksame große Zeitkonstante der Abtrennstufe 3 auf einen wesentlich geringeren Wert umgeschaltet. Durch die Abtrennung oder Abkopplung der Schwungradstufe 5 kann sich nunmehr die Abtrennstufe 3 sehr schnell, etwa im Bereich des Zeitpunktes t4 auf die neue geänderte Phasenlage der Zeilensynchronimpulse gemäß Fig. 2c ab t4 einstellen. Kurz danach, z.B. zwei bis drei Zeilen nach Beginn der Störung, wird der Schalter S durch das Steuersignal Us wieder geschlossen und somit die Schwungradstufe 5 wieder angekoppelt und die Zeitkonstante wieder erhöht.

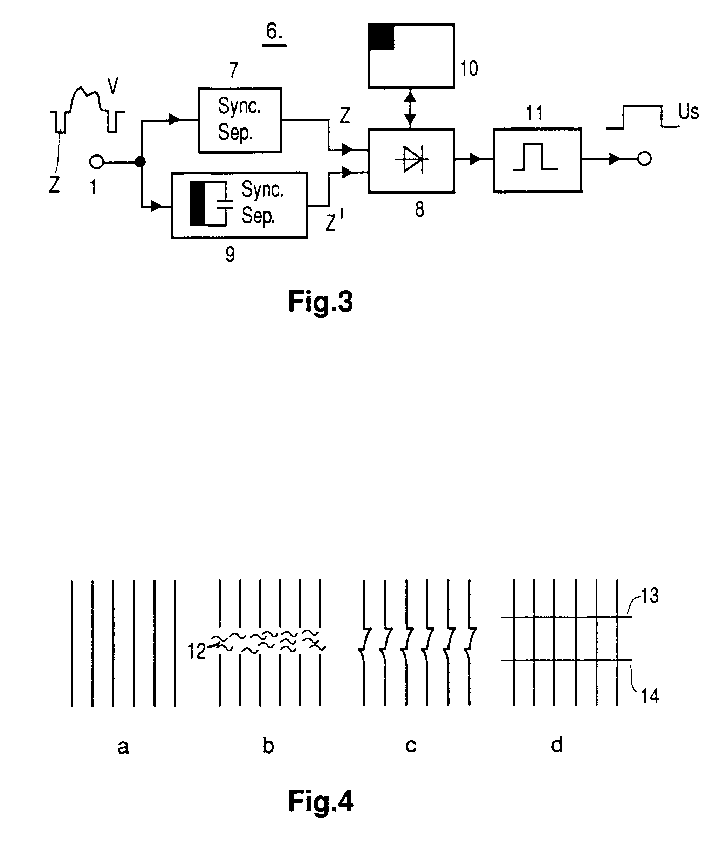

Fig. 3 zeigt ein Blockschaltbild für die Realisierung der Steuerschaltung 6. Das Videosignal V gelangt von der Klemme 1 auf die Synchronsignal-Abtrennstufe 7, die ohne Schwungradstufe, also praktisch ohne Zeitkonstante arbeitet und nur amplitudenselektiv die Zeilensynchronimpulse Z vom Videosignal abtrennt. Die abgetrennten Zeilensynchronimpulse Z, die somit in der zeitlichen Lage exakt den Zeilensynchronimpulsen Z des Videosignals an der Klemme 1 entsprechen, gelangen auf die Phasenvergleichsstufe 8. Das Videosignal V wird außerdem der zweiten Synchronsignal-Abtrennstufe 9 zugeführt. Diese arbeitet jedoch ständig mit der durch den Schwingkreis angedeuteten Schwungradstufe, also mit hoher Zeitkonstante. Die Zeilensynchronimpulse Z' am Ausgang der Stufe 9 folgen also nicht plötzlichen Änderungen in der zeitlicher Lage der angebotenen Zeilensynchronimpulsen. In der Phasenvergleichsstufe 8 wird nun die zeitliche Lage zwischen den Zeilensynchronimpulsen Z und Z' verglichen. Jede Phasenabweichung zwischen Z und Z', also z.B. zwischen dem Zeilensynchronimpuls Z2 des angelieferten Videosignals V und den entsprechenden von der Abtrennstufe 9 kommenden Zeilensynchronimpuls bei t3 gemäß Fig. 2 wird in der Phasenvergleichsstufe 8 ermittelt und dem angeschlossenen Speicher 10 zugeführt. Der Speicher 10 speichert nunmehr die Ergebnisse der Phasenabweichung nach Größe, Richtung und Zahl. Sobald eine Phasenabweichung in mehreren aufeinanderfolgenden Zeilen ermittelt wird, also der Zustand gemäß Fig. 2c detektiert wird, wird über die Impulsstufe 11 das Steuersignal Us erzeugt, das in der beschriebenen Weise die Abkopplung der Schwungradstufe 5 gemäß Fig. 1, 2 auslöst. Us wird z.B. dann erzeugt, wenn über drei aufeinanderfolgende Zeilen eine Phasenabweichung der Zeilensynchronimpulse gegenüber dem vorangehenden Raster ermittelt wird.

Fig. 4 zeigt verschiedene Formen von auf dem Bildschirm dargestellten senkrechten Linien bei einem Signal von einen Videorecorder.
Fig. 4a zeigt den normalen Wiedergabevorgang ohne nennenswerte Fehler im Signal. Die senkrechten Linien im Bild sind dann ungestört.
Fig. 4b zeigt den Zustand für einen Suchlauf. Dadurch, daß die abtastenden Köpfe nacheinander über benachbarte Spuren laufen und auch auf Spuren mit nicht passendem Azimutwinkel gelangen, kommt es in der Bildmitte zu einer Störzone 12 in Form eines Rauschbalkens.
Fig. 4c zeigt das gleiche für einen Recorder, in dem durch Umschaltung auf mehrere Köpfe sichergestellt ist, daß jeweils eine Abtastung mit dem richtigen Azimutwinkel erfolgt. Es entsteht dann kein Signalausfall mehr, und der Störbalken 12 gemäß Fig. 4b wird vermieden. Jedoch dadurch, daß die Köpfe nacheinander auf verschiedene Spuren laufen und eine Umschaltung zwischen verschiedenen Köpfen erfolgt, kommt es zu einem Phasensprung bei den Zeilensynchronimpulsen Z. Wenn die Zeilenablenkschaltung diesen Phasensprung nicht schnell genug folgen kann, kommt es zu den Störungen gemäß Fig. 4c in Form eines Ausbrechens senkrechter Linien.
Fig. 4d zeigt den Fall mit der beschriebenen Abkopplung der Schwungradstufe. Da die Ursache für die Störung gemäß Fig. 4c erkannt und der Auswirkung durch Abkopplung der Schwungradstufe rechtzeitig entgegengewirkt wird, gibt es nur eine kurze Störung währen einer oder mehrerer Zeilen, wie durch die Linien 13, 14 angedeutet ist. Die Störung gemäß Fig. 4c, die durch eine zu große Zeitkonstante entsteht, wird vermieden.

## Patentansprüche

1. Synchronsignal-Abtrennschaltung für einen Fernsehempfänger mit einer amplitudenselektiven Stufe und einer Schwungradstufe, die eine zur Störunterdrückung dienende Trägheit in die Abtrennung einführt, **gekennzeichnet durch** folgen Merkmale:
a) im Weg des Videosignals (V) zu der Abtrennstufe (3) liegt eine Verzögerungsstufe (2),
b) das Videosignal (V) vor der Verzögerungsstufe (2) ist an eine Steuerschaltung (6) angelegt, die durch Auswertung der zeitlichen Lage von Zeilensynchronimpulsen (Z) mehrerer aufeinander folgender Zeilen ein Steuersignal (Us) für die folgenden zwei Störfälle erzeugt:
- nur ein Zeilensynchronimpuls (Z1) innerhalb des Zeilenrasters fehlt oder hat eine falsche zeitliche Lage, und die folgenden Zeilensynchronimpulse liegen wieder richtig zum Zeilenraster,
- das gesamte auf eine Störung folgende Zeilenraster ist mit Beginn der Störung um einen Zeitbetrag (ΔT) versetzt. c) das Steuersignal (Us) setzt im zweiten Störfall die Schwungradstufe (5) vorübergehend außer Betrieb.

2. Schaltung nach Anspruch 1, **dadurch gekennzeichnet**, daß die Verzögerungszeit der Verzögerungsstufe (2) mehrere Zeilen beträgt.

3. Schaltung nach Anspruch 1, **dadurch gekennzeichnet**, daß die Verzögerungsstufe (2) als digitaler Speicher ausgebildet ist.

4. Schaltung nach Anspruch 1, **dadurch gekennzeichnet**, daß das Außerbetriebsetzen der Schwungradstufe (5) durch Verringerung einer in der Abtrennstufe (3) wirksamen Zeitkonstante erfolgt.

5. Schaltung nach Anspruch 1, **dadurch gekennzeichnet**, daß die Steuerschaltung (6) eine vom Signal gesteuerte, eine Schwungradstufe aufweisende zweite Abtrennstufe (9) und eine Phasenvergleichsstufe (8) enthält, die die zeitliche Lage zwischen den angelieferten Zeilensynchronimpulsen und den in der zweiten Abtrennstufe (9) daraus erzeugten Zeilensynchronsimpulsen auswertet und daraus das Steuersignal (Us) erzeugt.

6. Schaltung nach Anspruch 1, **dadurch gekennzeichnet**, daß an die Phasenvergleichsstufe (8) ein Speicher (10) für die ermittelten Phasenabweichungen nach Anzahl, Betrag und Richtung angeschlossen ist.

7. Schaltung nach Anspruch 5, **dadurch gekennzeichnet**, daß an den Ausgang der Phasenvergleichsstufe (8) ein Zähler angeschlossen ist, der die aufeinanderfolgenden Zeilen in der Phasenvergleichsstufe (8) ermittelten Phasenabweichungen zwischen den Zeilensynchronimpulsen (Z) zählt und bei Erreichen eines vorbestimmten Zählergebnisses (3) das Steuersignal (Us) erzeugt.

## Claims

1. Synchronising signal separating circuit for a television receiver including an amplitude selective stage and a flywheel stage which introduces a response time into the separation that serves for suppressing disturbances, characterised by the following features:
a) a delay circuit (2) is located in the path of the video signal (V) to the separating stage (3),
b) prior to the delay stage (2), the video signal (V) is applied to a control circuit (6) which generates a control signal (Us) for the following two cases of disturbance by evaluating the time positions of line synchronising pulses (Z) of a plurality of successive lines
just one line synchronising pulse (Z1) is missing within the line raster, or, it has an incorrect time position, and the following line synchronising pulses are then correct once more with respect to the line raster, the whole line raster following a disturbance is displaced by one time unit (ΔT) from the beginning of the disturbance.
c) in the second case of disturbance, the control signal (Us) temporarily makes the flywheel stage (5) inoperative.

2. Circuit in accordance with Claim 1, characterised in that, the delay time of the delay stage (2) amounts to a plurality of lines.

3. Circuit in accordance with Claim 1, characterised in that, the delay stage (2) is constructed as a digital store.

4. Circuit in accordance with Claim 1, characterised in that, the rendering inoperative of the flywheel stage (5) is effected by reducing a time constant which is effective in the separating stage (3).

5. Circuit in accordance with Claim 1, characterised in that, the control circuit (6) contains a second separating stage (9), which incorporates a flywheel stage and is controlled by the signal, and a phase comparison stage (8) which evaluates the time position between the supplied line synchronising pulses and the line synchronising pulses generated therefrom in the second separating stage (9) and generates the control signal (Us) therefrom.

6. Circuit in accordance with Claim 1, characterised in that, a store (10) for the phase deviations that have been determined in terms of number, magnitude and direction is connected to the phase comparison stage (8).

7. Circuit in accordance with Claim 5, characterised in that, a counter, which counts the phase deviations between the line synchronising pulses (Z) the successive lines that have been determined in the phase comparison stage (8) and generates the control signal (Us) upon reaching a predetermined counter state (3), is connected to the output of the phase comparison stage (8).

## Revendications

1. Circuit séparateur du signal de synchronisation pour un récepteur de télévision avec un étage sélecteur d'amplitude et un étage à effet de volant, qui introduit dans la séparation une inertie destinée à l'élimination des brouillages, **caractérisé par** les attributs suivants :
a) Sur le chemin du signal vidéo (V) jusqu'à l'étage séparateur (3) se trouve un étage retardateur (2).
b) Le signal vidéo (V) avant l'étage séparateur (2) est appliqué à un circuit de commande (6), qui produit un signal de commande (Us), par évaluation de la position temporelle des impulsions de synchronisation de lignes (Z) de plusieurs lignes consécutives, dans les deux cas de brouillage suivants :
- seule une impulsion de synchronisation de ligne (Z1) dans la trame de lignes manque ou a une mauvaise position temporelle, et les impulsions de synchronisation de lignes suivantes sont à nouveau exactes par rapport à la trame de lignes ;
- toute la trame de lignes suivant un brouillage est décalée dès le début du brouillage d'une valeur de temps (DT).
c) Le signal de commande (Us), dans le deuxième cas de brouillage, met provisoirement l'étage à effet de volant (5) hors service.

2. Circuit conformément à la revendication 1, **caractérisé en ce que** le temps de retard de l'étage retardateur (2) s'élève à plusieurs lignes.

3. Circuit conformément à la revendication 1, **caractérisé en ce que** l'étage retardateur (2) est formé comme une mémoire numérique.

4. Circuit conformément à la revendication 1, **caractérisé en ce que** la mise hors service de l'étage à effet de volant (5) se produit par réduction d'une constante de temps effective dans l'étage séparateur (3).

5. Circuit conformément à la revendication 1, **caractérisé en ce que** le circuit de commande (6) comprend un étage séparateur commandé par le signal, un deuxième étage séparateur (9) présentant un étage à effet de volant et un étage de comparaison de phases (8), qui évalue la position temporelle entre les impulsions de synchronisation de lignes délivrées et les impulsions de synchronisation de lignes produites dans le deuxième étage séparateur (9) et fournit à partir de cela le signal de commande (Us).

6. Circuit conformément à la revendication 1, **caractérisé en ce que** une mémoire (10) est reliée à l'étage de comparaison de phase (8) pour les écarts de phase détectés en grandeur, direction et nombre.

7. Circuit conformément à la revendication 5, **caractérisé en ce que** un compteur est relié à la sortie de l'étage de comparaison de phases (8) ; il compte les lignes consécutives des écarts de phases détectés dans l'étage de comparaison de phases (8) entre les impulsions de synchronisation de lignes (Z) et produit le signal de commande (Us) lorsqu'un compte prédéfini (3) est atteint.
